# EUROPEAN PATENT SPECIFICATION

(11) **EP 3 988 860 B1**
(45) Date of publication and mention of the grant of the patent: **28.02.2024**
(21) Application number: 19934013.4
(22) Date of filing: 17.12.2019
(51) Int. Cl.: B61D 27/00, F25B 1/00, F25B 13/00, F25B 49/02, B60H 1/00, B60H 1/32, B60H 1/22

(54) **VEHICULAR AIR-CONDITIONING DEVICE**
FAHRZEUGKLIMAANLAGE
DISPOSITIF DE CLIMATISATION DE VÉHICULE

(30) Priority: 20.06.2019 JP 2019114330
(43) Date of publication of application: 27.04.2022
(73) Proprietor: MITSUBISHI ELECTRIC CORPORATION, Chiyoda-ku Tokyo 100-8310 (JP)
(72) Inventor: SHINGU, Wahei, Tokyo 100-8310 (JP)
(74) Representative: Studio Torta S.p.A.
(86) International application number: PCT/JP2019/049290
(87) International publication number: WO 2020/255454

(56) References cited:
- JP-A- 2000 052 753
- JP-A- 2012 167 869
- US-A1- 2003 037 562
- US-A1- 2012 117 993
- US-A1- 2019 011 154

## Description

### Technical Field

The present invention relates to a vehicular air-conditioning device.

### Background Art

WO 2017/212631 describes a known air-conditioning device that is switchable between a cooling state for cooling and a heating state for heating by switching the direction of refrigerant circulation in a refrigeration cycle. This air-conditioning device includes a single electronic expansion valve used both in the cooling and heating states. In this structure, the direction in which the refrigerant passes through the electronic expansion valve (hereafter, refrigerant pass direction) changes between the cooling and heating states.

JPH10-26429 describes a known air-conditioning device that includes different electronic expansion valves in the cooling and heating states. This air-conditioning device includes a cooling electronic expansion valve that expands the refrigerant in the cooling state and a heating electronic expansion valve that expands the refrigerant in the heating state. The refrigerant flows unidirectionally through each of the cooling and heating electronic expansion valves.

### Summary of Invention

### Technical Problem

For integrity, a vehicular air-conditioning device mounted on a vehicle may use carbon dioxide as a nonflammable refrigerant. Carbon dioxide has relatively high saturation pressure. Thus, carbon dioxide used as a refrigerant has a large difference in pressure between upstream and downstream from an electronic expansion valve.

With carbon dioxide used as a refrigerant, the structure in WO 2017/212631 is likely to fail to control the performance of air-conditioning the vehicle interior (hereafter, air-conditioning performance). This is because the dynamic characteristics of the electronic expansion valve may change depending on a direction in which a refrigerant passes through the electronic expansion valve particularly when the refrigerant has a large difference in pressure between upstream and downstream from an electronic expansion valve.

In an air-conditioning device described in JPH10-26429, the refrigerant flows unidirectionally through each of the cooling and heating electronic expansion valves.

To use the cooling and heating electronic expansion valves separately, a bypass line including a check valve is to be included for each of the cooling and heating electronic expansion valves.

A bypass line is to be included for the cooling electronic expansion valve for the refrigerant to bypass the cooling electronic expansion valve during heating. A bypass line is to be included for the heating electronic expansion valve for the refrigerant to bypass the heating electronic expansion valve during cooling. Such multiple dedicated bypass lines complicate the structure.

US2003037562 A1 discloses a vehicle air conditioner for heating a passenger compartment by a heater core and a heat pump cycle, wherein when operation of a heat pump cycle is switched from a defrosting operation to a heating assist operation, a heating degree of the heater core is increased higher than a predetermined heating degree. Further, when the operation of the heat pump cycle is switched from the defrosting operation to the heating assist operation, an air outlet mode except for a defrosting mode for defrosting a windshield is set. Further, in the defrosting operation of the heat pump cycle, the temperature of an interior heat exchanger of the heat pump cycle is set higher. An objective of the present disclosure is to provide a vehicular air-conditioning device that has a simple structure and can facilitate the air-conditioning performance control using a refrigerant containing carbon dioxide.

### Solution to Problem

To achieve the above objective, a vehicular air-conditioning device according to an aspect of the present invention according to claim 1 includes:
a compressor to compress a refrigerant;
an expander to expand the refrigerant;
an outdoor heat exchanger and an indoor heat exchanger that form a refrigeration cycle together with the compressor and the expander, each of the outdoor heat exchanger and the indoor heat exchanger being operable in the refrigeration cycle as a condenser to condense the refrigerant and an evaporator to evaporate the refrigerant, wherein one of the outdoor heat exchanger or the indoor heat exchanger operates as the condenser when the other of the outdoor heat exchanger or the indoor heat exchanger operates as the evaporator; and
a switching device to switch a state of the refrigeration cycle between a cooling state in which the outdoor heat exchanger operates as the condenser and the indoor heat exchanger operates as the evaporator and a heating state in which the indoor heat exchanger operates as the condenser and the outdoor heat exchanger operates as the evaporator, in which
the refrigerant contains carbon dioxide, and
the expander includes
   a cooling electric expansion device to expand the refrigerant condensed by the outdoor heat exchanger when the refrigeration cycle is in the cooling state,
   a heating electric expansion device connected in parallel to the cooling electric expansion device to form flows of the refrigerant that are parallel to each other and configured to expand the refrigerant condensed by the indoor heat exchanger when the refrigeration cycle is in the heating state, and
   a blocking device to block the refrigerant from flowing into the cooling electric expansion device when the refrigeration cycle is in the heating state, and to block the refrigerant from flowing into the heating electric expansion device when the refrigeration cycle is in the cooling state.

### Advantageous Effects of Invention

The above structure prevents a refrigerant from flowing into a cooling electric expansion device in a heating state, and prevents the refrigerant from flowing into a heating electric expansion device in a cooling state. Thus, the refrigerant unidirectionally passes through each of the cooling and heating electric expansion devices. This structure does not change dynamic characteristics of the cooling and heating electric expansion devices depending on the directions in which the refrigerant passes. This structure thus facilitates air-conditioning performance control regardless of using a refrigerant containing carbon dioxide having a high saturation pressure.

The cooling and heating electric expansion devices are connected in parallel. Thus, in the cooling state in which the refrigerant is prevented from flowing into the heating electric expansion device, the cooling electric expansion device serves as a bypass for the refrigerant to bypass the heating electric expansion device. In the heating state where the refrigerant is prevented from flowing into the cooling electric expansion device, the heating electric expansion device serves as a bypass for the refrigerant to bypass the cooling electric expansion device. This structure may eliminate dedicated bypass lines for the cooling and heating electric expansion devices, and can be simplified.

### Brief Description of Drawings

FIG. 1 is a schematic diagram of a railway-vehicle air-conditioning device according to Embodiment 1;
FIG. 2 is a schematic diagram of an expander according to Embodiment 1;
FIG. 3 is a partial cross-sectional view of an example electronic expansion valve according to Embodiment 1;
FIG. 4 is a schematic diagram of an expander according to Embodiment 2;
FIG. 5 is a schematic diagram of an expander according to Embodiment 3;
FIG. 6 is a schematic diagram of an expander according to Embodiment 4;
FIG. 7 is a schematic diagram of a switching circuit according to Embodiment 5; and
FIG. 8 is a flowchart showing an expander control according to Embodiment 6.

### Description of Embodiments

A railway-vehicle air-conditioning device according to one or more embodiments is described with reference to the drawings using a railway vehicle as an example. In the figures, the same or corresponding components are given the same reference numerals.

### Embodiment 1

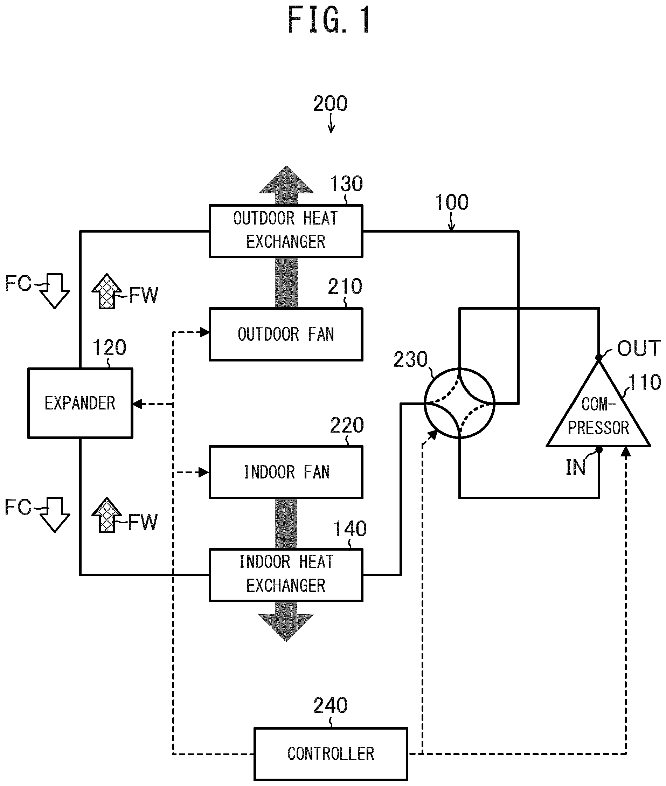

As illustrated in FIG. 1, a railway-vehicle air-conditioning device 200 according to the present embodiment includes a refrigeration cycle 100 in which a refrigerant circulates. The refrigeration cycle 100 generates cooling to cool a non-illustrated passenger compartment in a railway vehicle, and generates heat to heat the passenger compartment.

An example refrigerant contains carbon dioxide as a main component, or more specifically, carbon dioxide with a purity of 99.9% or greater with refrigerant number R744. For a high level of safety with its nonflammability, carbon dioxide is particularly suitable for the refrigeration cycle 100 mounted on a railway vehicle. Moreover, carbon dioxide has a low global warming potential.

The refrigeration cycle 100 includes a compressor 110 that compresses the refrigerant, an expander 120 that expands the refrigerant, and an outdoor heat exchanger 130 and an indoor heat exchanger 140 that form the refrigeration cycle 100 together with the compressor 110 and the expander 120. One of the outdoor heat exchanger 130 or the indoor heat exchanger 140 functions as a condenser that condenses the refrigerant, and the other functions as an evaporator that evaporates the refrigerant.

The railway-vehicle air-conditioning device 200 includes an outdoor fan 210 that forms an airflow blowing against the outdoor heat exchanger 130. The airflow formed by the outdoor fan 210 facilitates heat exchange between the outdoor heat exchanger 130 and outside air or air out of a non-illustrated railway vehicle.

The railway-vehicle air-conditioning device 200 also includes an indoor fan 220 that forms an airflow blowing against the indoor heat exchanger 140. The airflow formed by the indoor fan 220 facilitates heat exchange between the indoor heat exchanger 140 and inside air or air inside the non-illustrated passenger compartment.

The railway-vehicle air-conditioning device 200 also includes a four-way valve 230 serving as a switching device that switches the direction of refrigerant circulation in the refrigeration cycle 100. The four-way valve 230 switches a state of the refrigeration cycle 100 between a cooling state in which the outdoor heat exchanger 130 operates as a condenser and the indoor heat exchanger 140 operates as an evaporator and a heating state in which the indoor heat exchanger 140 operates as a condenser and the outdoor heat exchanger 130 operates as an evaporator.

The railway-vehicle air-conditioning device 200 also includes a controller 240 that controls the rotational speed of the compressor 110, the expansion degree at which the expander 120 expands the refrigerant, the rotational speed of the outdoor fan 210, the rotational speed of the indoor fan 220, and the four-way valve 230. Under the control of the controller 240, the four-way valve 230 switches the state between the cooling and heating states.

In the cooling state, the refrigerant circulates in the compressor 110, the outdoor heat exchanger 130, the expander 120, and the indoor heat exchanger 140 in this order.

Thus, in the cooling state, a refrigerant flow (hereafter referred to as cooling refrigerant flow) FC flowing from the outdoor heat exchanger 130 toward the indoor heat exchanger 140 is formed between the outdoor heat exchanger 130 and the indoor heat exchanger 140.

In the heating state, the refrigerant circulates in the compressor 110, the indoor heat exchanger 140, the expander 120, and the outdoor heat exchanger 130 in this order.

Thus, in the heating state, a refrigerant flow (hereafter, heating refrigerant flow) FW flowing from the indoor heat exchanger 140 toward the outdoor heat exchanger 130 is formed between the outdoor heat exchanger 130 and the indoor heat exchanger 140. More specifically, the direction in which the refrigerant passes through the expander 120 changes between the cooling and heating states. The structure according to the present embodiment particularly includes the expander 120 adaptive to a change of the direction in which the refrigerant passes. The structure of the expander 120 is described more specifically below.

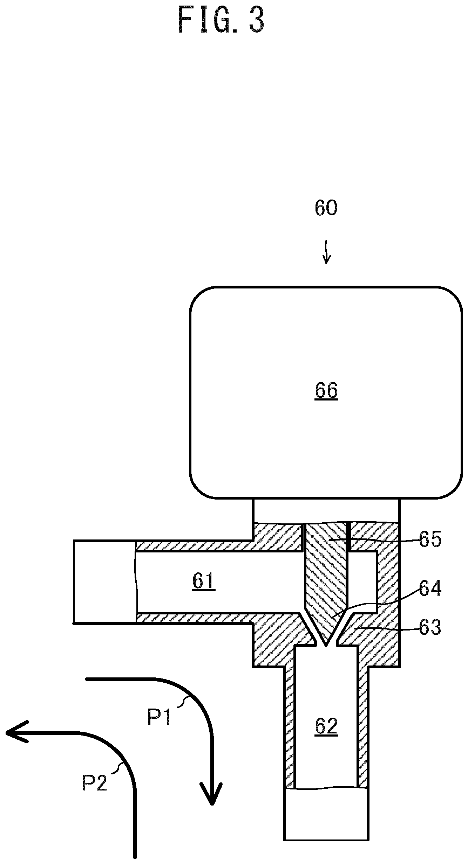

The expander 120 includes electronic expansion valves. The electronic expansion valves herein refer to elements that expand the refrigerant by reducing refrigerant flows that pass through the valves and allows regulation of the degree of the refrigerant flow reduction with an external electronic control. The electronic expansion valves include an electronic linear expansion valve. FIG. 3 shows an example structure of the electronic expansion valves included in the expander 120.

As illustrated in FIG. 3, an electronic expansion valve 60 includes a first port 61 defining a hollow tubular flow path, a second port 62 defining a hollow tubular flow path extending in a direction intersecting with the first port 61, and a funnel-shaped valve seat 63 that connects the first port 61 and the second port 62 at an intersection of the first port 61 and the second port 62.

The electronic expansion valve 60 also includes a valve rod 65 including a needle valve 64 shaped to fit to the valve seat 63 at the tip, and a forward-rearward movement mechanism 66 that moves the valve rod 65 forward and rearward to change the size of the clearance between the needle valve 64 and the valve seat 63. The forward-rearward movement mechanism 66 moves the valve rod 65 forward and rearward upon receiving an electronic control from the controller 240 illustrated in FIG. 1.

The electronic expansion valve 60 allows the refrigerant to pass through in a direction from one of the first port 61 or the second port 62 to the other. The refrigerant flow is reduced in the clearance between the needle valve 64 and the valve seat 63 to expand the refrigerant with valve expansion. Changing the clearance between the needle valve 64 and the valve seat 63 can adjust the degree at which the refrigerant expands (hereafter, expansion degree).

Passage of the refrigerant from the first port 61 toward the second port 62 is referred to as forward passage P1, and passage of the refrigerant from the second port 62 toward the first port 61 is referred to as reverse passage P2.

A force used to reduce the refrigerant flow differs between the forward passage P1 and the reverse passage P2. More specifically, the valve rod 65 traverses the first port 61 and extends in parallel to the second port 62. Thus, a force used to reduce the refrigerant flow, that is, a force used to move the valve rod 65 forward is larger for the reverse passage P2 than for the forward passage P1.

As described above, the electronic expansion valve 60 in the present embodiment changes the force used to reduce the refrigerant flow depending on the direction in which the refrigerant passes. Thus, the dynamic characteristics of opening or closing the electronic expansion valve 60, or more specifically, the dynamic characteristics of moving the valve rod 65 forward or rearward change depending on the direction in which the refrigerant passes. In particular, carbon dioxide serving as a refrigerant has a large pressure difference at the front and rear of the electronic expansion valve 60. Thus, the dynamic characteristics of moving the valve rod 65 forward and rearward largely change depending on the direction in which the refrigerant passes.

When the direction in which the refrigerant passes through the electronic expansion valve 60 changes with switching from one of the cooling refrigerant flow FC or the heating refrigerant flow FW illustrated in FIG. 1 to the other, the air-conditioning performance control may be difficult.

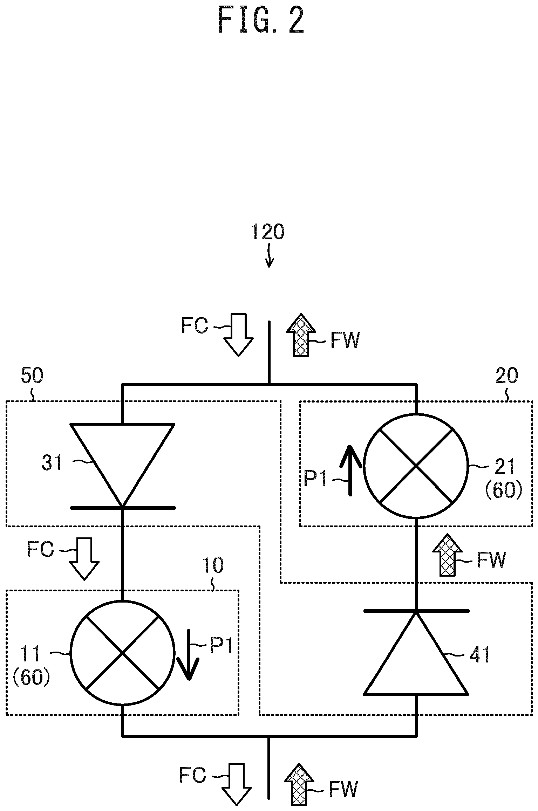

The structure according to the present embodiment avoids a failure in air-conditioning performance control regardless of using the electronic expansion valve 60 having the dynamic characteristics changeable depending on the direction in which the refrigerant passes. This is described in detail with reference to FIG. 2.

As illustrated in FIG. 2, the expander 120 includes a cooling electronic expansion valve 11 including the electronic expansion valve 60 illustrated in FIG. 3, and a heating electronic expansion valve 21 including the electronic expansion valve 60 illustrated in FIG. 3. The heating electronic expansion valve 21 is connected in parallel to the cooling electronic expansion valve 11 to form parallel flows of the refrigerant.

The expander 120 also includes a heating check valve 31 connected in series to the cooling electronic expansion valve 11 to form a series flow of the refrigerant, and a cooling check valve 41 connected in series to the heating electronic expansion valve 21 to form a series flow of the refrigerant. The cooling electronic expansion valve 11 and the heating check valve 31 connected in series and the heating electronic expansion valve 21 and the cooling check valve 41 connected in series are connected in parallel to each other. In the heating state, the heating check valve 31 blocks the heating refrigerant flow FW from flowing into the cooling electronic expansion valve 11. In other words, the heating check valve 31 is located to block passage of the heating refrigerant flow FW and allow passage of the cooling refrigerant flow FC.

In the cooling state, the cooling check valve 41 blocks the cooling refrigerant flow FC from flowing into the heating electronic expansion valve 21. In other words, the cooling check valve 41 is located to block passage of the cooling refrigerant flow FC and allow passage of the heating refrigerant flow FW.

More specifically, the heating check valve 31 and the cooling check valve 41 form a blocking device 50 that blocks the refrigerant from flowing into the cooling electronic expansion valve 11 in the heating state, and from flowing into the heating electronic expansion valve 21 in the cooling state.

Thus, the cooling and heating electronic expansion valves 11 and 21 are used separately in the cooling and heating states. More specifically, in the cooling state, the cooling electronic expansion valve 11 functions as a cooling electric expansion device 10 that expands the refrigerant condensed by the outdoor heat exchanger 130 illustrated in FIG. 1. In the heating state, the heating electronic expansion valve 21 functions as the heating electric expansion device 20 that expands the refrigerant condensed by the indoor heat exchanger 140 illustrated in FIG. 1.

In the structure described above, the refrigerant unidirectionally flows through each of the cooling and heating electronic expansion valves 11 and 21. More specifically, the cooling refrigerant flow FC flows through the cooling electronic expansion valve 11 alone, and the heating refrigerant flow FW flows through the heating electronic expansion valve 21 alone.

This structure does not change the dynamic characteristics of the cooling and heating electronic expansion valves 11 and 21 depending on the direction in which the refrigerant passes. This structure thus facilitates air-conditioning performance control regardless of using carbon dioxide with a high saturation pressure as a refrigerant.

In the present embodiment, the cooling electronic expansion valve 11 is located to allow the cooling refrigerant flow FC corresponding to the forward passage P1 illustrated in FIG. 3. The heating electronic expansion valve 21 is located to allow the heating refrigerant flow FW corresponding to the forward passage P1 illustrated in FIG. 3.

In this structure, each of the cooling and heating electronic expansion valves 11 and 21 uses a small force to reduce the refrigerant flow. Thus, each of the cooling and heating electronic expansion valves 11 and 21 can easily improve the resolution for adjusting the expansion degree of the refrigerant.

Carbon dioxide with a high saturation pressure is used as a refrigerant. Thus, the expansion degree of the refrigerant can be easily controlled precisely regardless of with a large difference between the pressures across the cooling electronic expansion valve 11 in the cooling state and a large difference between the pressures across the heating electronic expansion valve 21 in the heating state.

The cooling and heating electronic expansion valves 11 and 21 are connected in parallel to each other. Thus, in the cooling state in which the refrigerant is blocked from flowing into the heating electronic expansion valve 21, the cooling electronic expansion valve 11 and the heating check valve 31 function as a bypass for the refrigerant to bypass the heating electronic expansion valve 21. In the heating state in which the refrigerant is blocked from flowing into the cooling electronic expansion valve 11, the heating electronic expansion valve 21 and the cooling check valve 41 function as a bypass for the refrigerant to bypass the cooling electronic expansion valve 11.

This structure can eliminate dedicated bypass lines for the cooling and heating electronic expansion valves 11 and 21, and can thus be simplified.

In the present embodiment, the cooling and heating electronic expansion valves 11 and 21 are used separately, and thus the frequency of use of the cooling and heating electronic expansion valves 11 and 21 can be reduced. This structure can thus further reduce the failure rate, compared with structures with a common electronic expansion valve used both in the cooling state and the heating state and with the refrigerant flow through the electronic expansion valve and rectified with a bridge circuit.

### Embodiment 2

In FIG. 2, the cooling electric expansion device 10 that expands the refrigerant in the cooling state includes a single cooling electronic expansion valve 11. The heating electric expansion device 20 that expands the refrigerant in the heating state includes a single heating electronic expansion valve 21.

The cooling and heating electric expansion devices 10 and 20 may each include more than one electronic expansion valve 60. A specific example in which the cooling electric expansion device 10 includes more electronic expansion valves 60 than the heating electric expansion device 20 is described.

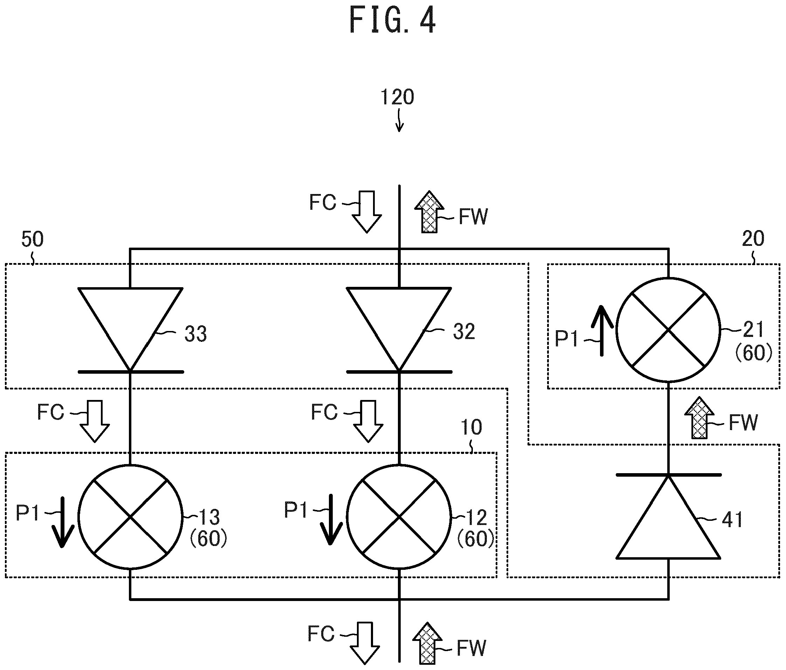

As illustrated in FIG. 4, in the present embodiment, the expander 120 includes a first cooling electronic expansion valve 12 and a second cooling electronic expansion valve 13 connected in parallel to each other, a first heating check valve 32 connected in series to the first cooling electronic expansion valve 12, and a second heating check valve 33 connected in series to the second cooling electronic expansion valve 13.

In the present embodiment, the cooling electric expansion device 10 that expands the refrigerant in the cooling state includes two electronic expansion valves 60 serving as the first cooling electronic expansion valve 12 and the second cooling electronic expansion valve 13.

The present embodiment is the same as Embodiment 1 in that, in the heating state, the heating electric expansion device 20 that expands the refrigerant includes a single heating electronic expansion valve 21, and that a single cooling check valve 41 is directly connected to the heating electronic expansion valve 21.

The first cooling electronic expansion valve 12 and the first heating check valve 32 connected in series and the second cooling electronic expansion valve 13 and the second heating check valve 33 connected in series are connected in parallel, and the heating electronic expansion valve 21 and the cooling check valve 41 connected in series are connected in parallel to the valves 12 and 32 and the valves 13 and 33.

The first heating check valve 32 blocks the heating refrigerant flow FW from flowing into the first cooling electronic expansion valve 12 in the heating state, and allows the cooling refrigerant flow FC to flow into the first cooling electronic expansion valve 12 in the cooling state.

The second heating check valve 33 blocks the heating refrigerant flow FW from flowing into the second cooling electronic expansion valve 13 in the heating state, and allows the cooling refrigerant flow FC to flow into the second cooling electronic expansion valve 13 in the cooling state.

The first heating check valve 32, the second heating check valve 33, and the cooling check valve 41 form the blocking device 50 that enables separate uses of the cooling and heating electric expansion devices 10 and 20.

In the present embodiment, the refrigerant is expanded with a single heating electronic expansion valve 21 in the heating state, and the refrigerant is expanded with the two electronic expansion valves 60 serving as the first cooling electronic expansion valve 12 and the second cooling electronic expansion valve 13 in the cooling state. This structure can thus improve the capability of the expander 120 expanding the refrigerant in the cooling state further than the capability of the expander 120 expanding the refrigerant in the heating state.

This structure can thus appropriately expand the refrigerant in the cooling state when the circulation rate of the refrigerant per unit time in the refrigeration cycle 100 illustrated in FIG. 1 is to be increased further than in the heating state.

All of the first cooling electronic expansion valve 12, the second cooling electronic expansion valve 13, and the heating electronic expansion valve 21 are the electronic expansion valves 60 illustrated in FIG. 3. Such common components can reduce the costs.

### Embodiment 3

FIG. 2 shows a structure in which the heating check valve 31 is located upstream from the cooling electronic expansion valve 11 in the direction of the cooling refrigerant flow FC, and the cooling check valve 41 is located upstream from the heating electronic expansion valve 21 in the direction of the heating refrigerant flow FW.

The heating check valve 31 may be located at any position to be connected in series to the cooling electronic expansion valve 11. The cooling check valve 41 may be located at any position to be connected in series to the heating electronic expansion valve 21. A specific example in which the positions of the heating check valve 31 and the cooling check valve 41 are changed is described below.

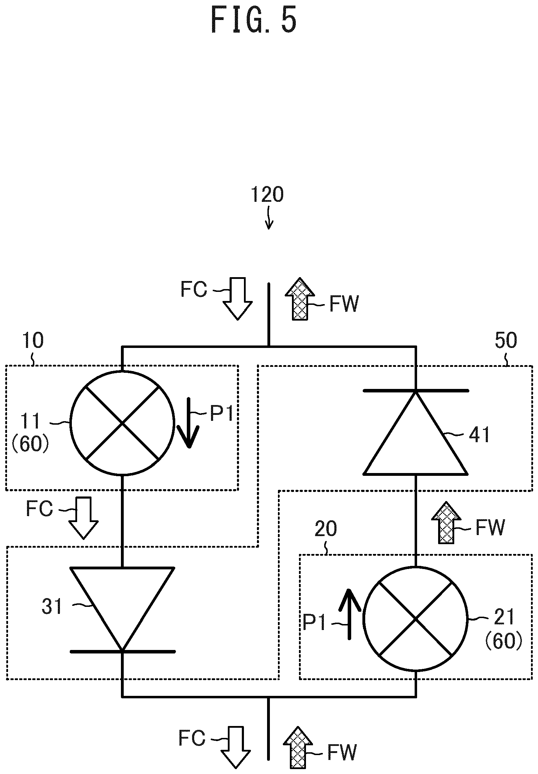

As illustrated in FIG. 5, in the present embodiment, the heating check valve 31 is located downstream from the cooling electronic expansion valve 11 in the direction of the cooling refrigerant flow FC. The cooling check valve 41 is located downstream from the heating electronic expansion valve 21 in the direction of the heating refrigerant flow FW. The present embodiment can produce the same effects as in Embodiment 1.

### Embodiment 4

FIG. 4 shows an example structure in which the blocking device 50 that enables separate uses of the cooling and heating electric expansion devices 10 and 20 includes the first heating check valve 32, the second heating check valve 33, and the cooling check valve 41. However, the blocking device 50 may include components other than check valves. A specific example structure is described.

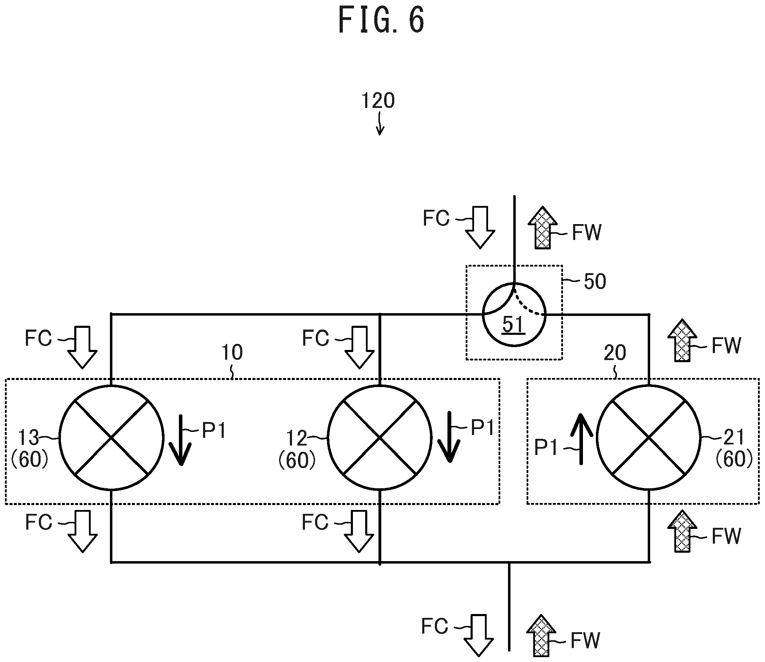

As illustrated in FIG. 6, in the present embodiment, the blocking device 50 that enables separate uses of the cooling and heating electric expansion devices 10 and 20 includes a three-way valve 51.

In the cooling state, the three-way valve 51 connects the first cooling electronic expansion valve 12 and the second cooling electronic expansion valve 13 serving as the cooling electric expansion device 10 to the outdoor heat exchanger 130 and the indoor heat exchanger 140 illustrated in FIG. 1, and disconnects the heating electronic expansion valve 21 serving as the heating electric expansion device 20 from the outdoor heat exchanger 130 or the indoor heat exchanger 140 illustrated in FIG. 1.

In the heating state, the three-way valve 51 connects the heating electronic expansion valve 21 serving as the heating electric expansion device 20 to the outdoor heat exchanger 130 and the indoor heat exchanger 140 illustrated in FIG. 1, and disconnects the first cooling electronic expansion valve 12 and the second cooling electronic expansion valve 13 serving as the cooling electric expansion device 10 from the outdoor heat exchanger 130 or the indoor heat exchanger 140 illustrated in FIG. 1.

In the present embodiment, the blocking device 50 that enables separate uses of the cooling and heating electric expansion devices 10 and 20 can include a single three-way valve 51. The structure according to the present embodiment can thus reduce the number of components further than in Embodiments 1 and 2. Other effects are the same as in Embodiment 2.

### Embodiment 5

FIG. 1 shows an example structure in which the four-way valve 230 serves as a switching device that switches the direction of refrigerant circulation in the refrigeration cycle 100. The switching device may include a component other than the four-way valve 230. A specific example structure is described.

As illustrated in FIG. 1, the compressor 110 includes an inlet IN through which the refrigerant evaporated by the evaporator flows in and an outlet OUT through which the refrigerant after being compressed flows out toward the condenser.

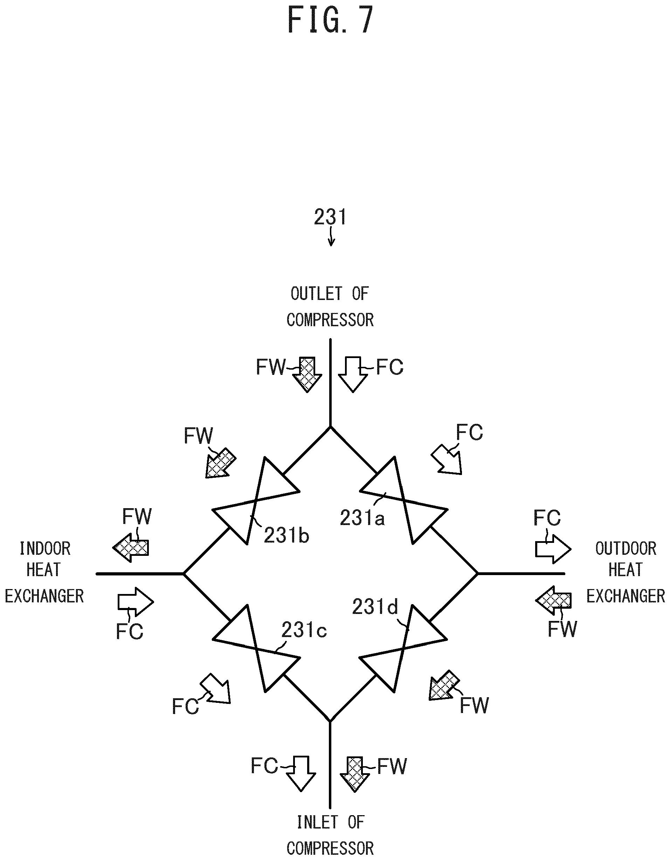

As illustrated in FIG. 7, in the present embodiment, a switching circuit 231 connects the outlet OUT of the compressor 110, the inlet IN of the compressor 110, the outdoor heat exchanger 130, and the indoor heat exchanger 140 to each other.

The switching circuit 231 includes a first electromagnetic valve 231a, a second electromagnetic valve 231b, a third electromagnetic valve 231c, and a fourth electromagnetic valve 231d that are switchable between an open state in which the refrigerant is allowed to pass through, and a closed state in which the refrigerant is blocked from passing through.

The first electromagnetic valve 231a is located in the refrigerant flow path between the outlet OUT of the compressor and the outdoor heat exchanger 130. The second electromagnetic valve 231b is located in the refrigerant flow path between the outlet OUT of the compressor and the indoor heat exchanger 140. The third electromagnetic valve 231c is located in the refrigerant flow path between the inlet IN of the compressor and the indoor heat exchanger 140. The fourth electromagnetic valve 231d is located in the refrigerant flow path between the inlet IN of the compressor and the outdoor heat exchanger 130.

In the cooling state, the first electromagnetic valve 231a and the third electromagnetic valve 231c are open, whereas the second electromagnetic valve 231b and the fourth electromagnetic valve 231d are closed. This structure forms the cooling refrigerant flow FC flowing from the outlet OUT of the compressor toward the outdoor heat exchanger 130 serving as a condenser, and the cooling refrigerant flow FC returning from the indoor heat exchanger 140 serving as an evaporator to the inlet IN of the compressor.

In the heating state, the second electromagnetic valve 231b and the fourth electromagnetic valve 231d are open, whereas the first electromagnetic valve 231a and the third electromagnetic valve 231c are closed. This structure forms the heating refrigerant flow FW flowing from the outlet OUT of the compressor toward the indoor heat exchanger 140 serving as a condenser, and the heating refrigerant flow FW returning from the outdoor heat exchanger 130 serving as an evaporator to the inlet IN of the compressor.

As described above, the switching circuit 231 serves as a switching device that switches the direction of refrigerant circulation in the refrigeration cycle 100 illustrated in FIG. 1. The present embodiment can also produce the same effects as in Embodiment 1.

### Embodiment 6

The controller 240 illustrated in FIG. 1 can control the expander. With the control, the degree at which the refrigerant flow is reduced in the cooling state by the cooling electric expansion device 10 is pre-controlled before a shift from the heating state to the cooling state, and the degree at which the refrigerant flow is reduced in the heating state by the heating electric expansion device 20 is pre-controlled before a shift from the cooling state to the heating state. The control is described in detail below.

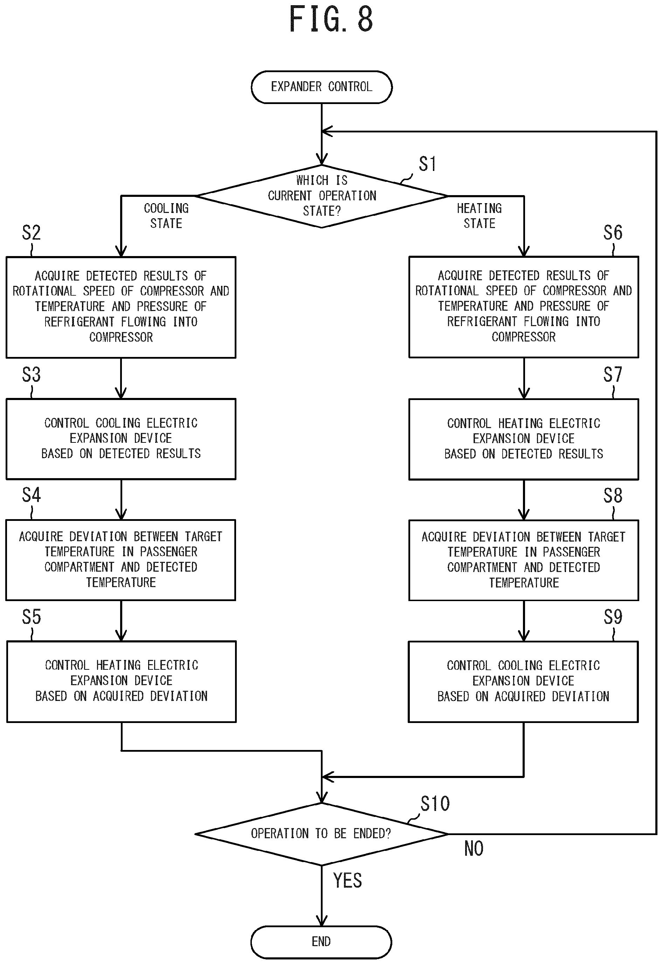

As illustrated in FIG. 8, first, the controller 240 determines whether the refrigeration cycle 100 currently operates in the cooling state or in the heating state (step S1).

When the refrigeration cycle 100 is currently in the cooling state (cooling state in step S1), the controller 240 acquires, from a non-illustrated sensor, detection results including the rotational speed of the compressor 110, and the temperature and the pressure of the refrigerant that flows into the compressor 110 (step S2).

Subsequently, based on the detection results acquired in step S2, the controller 240 controls the degree at which the cooling electric expansion device 10 reduces the refrigerant flow, or more specifically, controls the position of the valve rod 65 in the electronic expansion valve 60 illustrated in FIG. 3 included in the cooling electric expansion device 10 in the forward-rearward movement direction (step S3).

The controller 240 then acquires, from a non-illustrated sensor, a detected value of the current temperature (hereafter, detected temperature) in the passenger compartment to be air-conditioned, and acquires a deviation between the detected temperature and a target value of the temperature (hereafter, target temperature) of the passenger compartment (step S4).

Subsequently, based on the deviation acquired in step S4, the controller 240 pre-controls the degree at which the heating electric expansion device 20 reduces the refrigerant flow in the subsequent heating state, or more specifically, controls the position of the valve rod 65 in the electronic expansion valve 60 illustrated in FIG. 3 included in the heating electric expansion device 20 in the forward-rearward movement direction (step S5). When the refrigeration cycle 100 is currently in the heating state in step S1 (heating state in step S1), the controller 240 acquires, from a non-illustrated sensor, detection results including the rotational speed of the compressor 110, and the temperature and the pressure of the refrigerant that flows into the compressor 110 (step S6).

Subsequently, based on the detection results acquired in step S6, the controller 240 controls the degree at which the heating electric expansion device 20 reduces the refrigerant flow, or more specifically, controls the position of the valve rod 65 in the electronic expansion valve 60 illustrated in FIG. 3 included in the heating electric expansion device 20 in the forward-rearward movement direction (step S7).

The controller 240 then acquires, from a non-illustrated sensor, a detected temperature in the passenger compartment, and acquires a deviation between the detected temperature and a target temperature in the passenger compartment (step S8). Based on the deviation acquired, the controller 240 pre-controls the degree at which the cooling electric expansion device 10 reduces the refrigerant flow in the subsequent cooling state, or more specifically, controls the position of the valve rod 65 in the electronic expansion valve 60 illustrated in FIG. 3 included in the cooling electric expansion device 10 in the forward-rearward movement direction (step S9).

After step S5 or S9, the controller 240 determines whether to end the operation of the compressor 110 (step S10). To continue the operation of the compressor 110 (NO in step S10), the controller 240 returns to step S1. To end the operation of the compressor 110 (YES in step S10), the controller 240 ends the expander control.

As described above, in the cooling state, the structure according to the present embodiment constantly controls the degree at which the heating electric expansion device 20 reduces the refrigerant flow in addition to the degree at which the cooling electric expansion device 10 reduces the refrigerant flow. In the heating state, the structure according to the present embodiment constantly controls the degree at which the cooling electric expansion device 10 reduces the refrigerant flow in addition to the degree at which the heating electric expansion device 20 reduces the refrigerant flow.

Thus, before the cooling or heating state is switched to the other, the degree at which the expander 120 expands the refrigerant is already controlled as appropriate. This structure is less likely to cause an unstable air-conditioning performance when the cooling or heating state is switched to the other, and enables smooth adjustment of the passenger compartment to a comfortable thermal environment.

The embodiments have been described above. The embodiments may be modified in the following manner.

In an example structure according to Embodiment 1, each of the cooling and heating electric expansion devices 10 and 20 includes the valve rod 65 that adjusts the refrigerant flow rate, the first port 61 defining the flow path crossing the valve rod 65, and the second port 62 defining the flow path parallel to the valve rod. Each of the cooling and heating electric expansion devices 10 and 20 is located in the direction in which the refrigerant passes from the first port 61 to the second port 62.

The structure of the electronic expansion valve included in each of the cooling and heating electric expansion devices 10 and 20 is not limited to the example structure illustrated in FIG. 3. Instead of an electronic expansion valve, each of the cooling and heating electric expansion devices 10 and 20 may include an element that uses different magnitudes of force to reduce the refrigerant flow depending on the direction in which the refrigerant passes.

In Embodiment 1, the blocking device 50 that enables separate uses of the cooling and heating electric expansion devices 10 and 20 includes the heating check valve 31 and the cooling check valve 41. However, an element included in the blocking device 50 may be other than check valves.

The blocking device 50 may include an electromagnetic valve that is switchable between a closed state in which a refrigerant flow is blocked and an open state in which the refrigerant flow is allowed and that can adjust the refrigerant flow rate. The blocking device 50 according to Embodiment 2 may also be formed similarly.

Thus, the blocking device 50 also has the function of adjusting the flow rate of the refrigerant flowing into the cooling electric expansion device 10 in the cooling state, and the function of adjusting the flow rate of the refrigerant flowing into the heating electric expansion device 20 in the heating state. This structure can thus finely control the air-conditioning performance.

In the example structure according to Embodiment 2, the cooling electric expansion device 10 includes more electronic expansion valves 60 than the heating electric expansion device 20. This structure can further improve the air-conditioning performance for cooling than for heating.

To improve the air-conditioning performance for heating further than for cooling, the heating electric expansion device 20 may include more electronic expansion valves 60 than the cooling electric expansion device 10.

More specifically, when each of the cooling and heating electric expansion devices 10 and 20 includes a single electronic expansion valve 60 or multiple electronic expansion valves 60 connected in parallel, and the number of electronic expansion valves 60 included in the cooling electric expansion device 10 differs from the number of electronic expansion valves 60 included in the heating electric expansion device 20, the air-conditioning performance can be varied between cooling and heating.

The railway vehicle herein includes a bullet train, a monorail, and other vehicles that travels along tracks, in addition to an electric train. A vehicle on which the refrigeration cycle 100 is to be mounted may be a bus or other automobiles, in addition to a railway vehicle.

The foregoing describes some example embodiments for explanatory purposes. Although the foregoing discussion has presented specific embodiments, persons skilled in the art will recognize that changes may be made in form and detail without departing from the scope of the invention as defined by the appended claims. Accordingly, the specification and drawings are to be regarded in an illustrative rather than a restrictive sense. This detailed description, therefore, is not to be taken in a limiting sense, and the scope of the invention is defined only by the included claims.

### Industrial Applicability

The vehicular air-conditioning device according to the present invention is applicable to air conditioning of a passenger compartment defined in a vehicle.

### Reference Signs List

- 10: Cooling electric expansion device
- 11: Cooling electronic expansion valve (electronic expansion valve)
- 12: First cooling electronic expansion valve
- 13: Second cooling electronic expansion valve
- 20: Heating electric expansion device
- 21: Heating electronic expansion valve (electronic expansion valve)
- 31: Heating check valve (check valve)
- 32: First heating check valve
- 33: Second heating check valve
- 41: Cooling check valve (check valve)
- 50: Blocking device
- 51: Three-way valve
- 60: Electronic expansion valve
- 61: First port
- 62: Second port
- 63: Valve seat
- 64: Needle valve
- 65: Valve rod
- 66: Forward-rearward movement mechanism
- 100: Refrigeration cycle
- 110: Compressor
- 120: Expander
- 130: Outdoor heat exchanger
- 140: Indoor heat exchanger
- 200: Railway-vehicle air-conditioning device (vehicular air-conditioning device)
- 210: Outdoor fan
- 220: Indoor fan
- 230: Four-way valve (switching device)
- 231: Switching circuit (switching device)
- 231a: First electromagnetic valve
- 231b: Second electromagnetic valve
- 231c: Third electromagnetic valve
- 231d: Fourth electromagnetic valve
- 240: Controller
- FC: Cooling refrigerant flow
- FW: Heating refrigerant flow
- IN: Inlet
- OUT: Outlet
- P1: Forward passage
- P2: Reverse passage

## Claims

1. A vehicular air-conditioning device (200) comprising:
a compressor (110) to compress a refrigerant;
an expander (120) to expand the refrigerant;
an outdoor heat exchanger (130) and an indoor heat exchanger (140) that form a refrigeration cycle (100) together with the compressor (110) and the expander (120), each of the outdoor heat exchanger (130) and the indoor heat exchanger (140) being operable in the refrigeration cycle (100) as a condenser to condense the refrigerant and an evaporator to evaporate the refrigerant, wherein one of the outdoor heat exchanger (130) or the indoor heat exchanger (140) operates as the condenser when the other of the outdoor heat exchanger (130) or the indoor heat exchanger (140) operates as the evaporator; and
a switching device (230) to switch a state of the refrigeration cycle (100) between a cooling state in which the outdoor heat exchanger (130) operates as the condenser and the indoor heat exchanger (140) operates as the evaporator and a heating state in which the indoor heat exchanger (140) operates as the condenser and the outdoor heat exchanger (130) operates as the evaporator, wherein
the refrigerant contains carbon dioxide,
the expander (120) includes
a cooling electric expansion device (10) to expand the refrigerant by reducing a flow of the refrigerant condensed by the outdoor heat exchanger (130) when the refrigeration cycle (100) is in the cooling state, the cooling electric expansion device (10) including a cooling first port (61) and a cooling second port (62) connected to the cooling first port (61), wherein a force used to reduce the flow of the refrigerant when the refrigerant passes from the cooling first port (61) toward the cooling second port (62) is smaller than a force used to reduce the flow of the refrigerant when the refrigerant passes from the cooling second port (62) toward the cooling first port (61),
a heating electric expansion device (20) connected in parallel to the cooling electric expansion device (10) to form another flow of the refrigerant that is parallel to the flow of the refrigerant and configured to expand the refrigerant by reducing the another flow of the refrigerant condensed by the indoor heat exchanger (140) when the refrigeration cycle (100) is in the heating state, the heating electric expansion device (20) including a heating first port (61) and a heating second port (62) connected to the heating first port (61), wherein a force used to reduce the another flow of the refrigerant when the refrigerant passes from the heating first port (61) toward the heating second port (62) is smaller than a force used to reduce the another flow of the refrigerant when the refrigerant passes from the heating second port (62) toward the heating first port (61), and
a blocking device (50) to block the refrigerant from flowing into the cooling electric expansion device (10) when the refrigeration cycle (100) is in the heating state, and to block the refrigerant from flowing into the heating electric expansion device (20) when the refrigeration cycle (100) is in the cooling state, and
the refrigerant passes through the cooling electric expansion device (10) from the cooling first port (61) toward the cooling second port (62) when the refrigeration cycle (100) is in the cooling state, and passes through the heating electric expansion device (20) from the heating first port (61) toward the heating second port (62) when the refrigeration cycle (100) is in the heating state;
wherein
the cooling electric expansion device (10) expands the refrigerant by reducing the flow of the refrigerant passing therethrough and allows control of a degree at which the flow of the refrigerant is reduced,
the heating electric expansion device (20) expands the refrigerant by reducing the another flow of the refrigerant passing therethrough and allows control of a degree at which the another flow of the refrigerant is reduced, and
the vehicular air-conditioning device (200) further comprises
a controller (240) configured to control the degrees at which the flows of the refrigerant are reduced;
**characterized in that** the controller (240) is further configured to pre-control the degree at which the flow of the refrigerant is reduced in the cooling state by the cooling electric expansion device (10) before a shift from the heating state to the cooling state and to pre-control the degree at which the another flow of the refrigerant is reduced in the heating state by the heating electric expansion device (20) before a shift from the cooling state to the heating state.

2. The vehicular air-conditioning device (200) according to claim 1, wherein
each of the cooling electric expansion device (10) and the heating electric expansion device (20) includes one electronic expansion valve (60), and
the blocking device (50) includes two check valves (31, 41), one check valve (31) of the two check valves (31, 41) being connected in series to the electronic expansion valve (60) included in the cooling electric expansion device (10) to form the flow of the refrigerant, and the other check valve (41) of the two check valves (31, 41) being connected in series to the electronic expansion valve (60) included in the heating electric expansion device (20) to form the another flow of the refrigerant.

3. The vehicular air-conditioning device (200) according to claim 1, wherein
each of the cooling electric expansion device (10) and the heating electric expansion device (20) includes one or more electronic expansion valves (60), and
a number of the one or more electronic expansion valves (60) included in the cooling electric expansion device (10) differs from a number of the one or more electronic expansion valves (60) included in the heating electric expansion device (20).

4. The vehicular air-conditioning device (200) according to any one of claims 1 to 3, wherein
the compressor (110) has an inlet (IN) through which the refrigerant evaporated by the evaporator flows in and an outlet (OUT) through which the refrigerant after being compressed flows out toward the condenser, and
the switching device (230) includes
a first electromagnetic valve (231a) located in a flow path for the refrigerant between the outlet (OUT) of the compressor (110) and the outdoor heat exchanger (130),
a second electromagnetic valve (231b) located in a flow path for the refrigerant between the outlet (OUT) of the compressor (110) and the indoor heat exchanger (140),
a third electromagnetic valve (231c) located in a flow path for the refrigerant between the inlet (IN) of the compressor (110) and the indoor heat exchanger (140), and
a fourth electromagnetic valve (231d) located in a flow path for the refrigerant between the inlet (IN) of the compressor (110) and the outdoor heat exchanger (130).

## Patentansprüche

1. Fahrzeugklimatisierungsvorrichtung (200), die Folgendes umfasst:
einen Kompressor (110), um ein Kältemittel zu verdichten;
einen Expander (120), um das Kältemittel zu expandieren;
einen Außenwärmetauscher (130) und einen Innenwärmetauscher (140), die zusammen mit dem Kompressor (110) und dem Expander (120) einen Kühlkreislauf (100) bilden, wobei jeder des Außenwärmetauschers (130) und des Innenwärmetauschers (140) im Kühlkreislauf (100) als ein Kondensator, um das Kältemittel zu kondensieren, und ein Verdampfer, um das Kältemittel zu verdampfen, betreibbar ist, wobei einer des Außenwärmetauschers (130) und des Innenwärmetauschers (140) als der Kondensator arbeitet, wenn der andere des Außenwärmetauschers (130) und des Innenwärmetauschers (140) als der Verdampfer arbeitet; und
eine Schaltvorrichtung (230), um einen Zustand des Kühlkreislaufs (100) zwischen einem Kühlzustand, in dem der Außenwärmetauscher (130) als der Kondensator arbeitet und der Innenwärmetauscher (140) als der Verdampfer arbeitet, und einem Heizzustand, in dem der Innenwärmetauscher (140) als der Kondensator arbeitet und der Außenwärmetauscher (130) als der Verdampfer arbeitet, umzuschalten, wobei
das Kältemittel Kohlenstoffdioxid enthält,
der Expander (120) Folgendes enthält:
eine elektrische Kühlexpansionsvorrichtung (10), um das Kältemittel durch Verringern eines Stroms des Kältemittels, das durch den Außenwärmetauscher (130) kondensiert wurde, zu expandieren, wenn der Kühlkreislauf (100) im Kühlzustand ist, wobei die elektrische Kühlexpansionsvorrichtung (10) einen ersten Kühlanschluss (61) und einen zweiten Kühlanschluss (62), der mit der erster Kühlanschluss (61) verbunden ist, enthält und eine Kraft, die verwendet wird, um den Strom des Kältemittels zu verringern, wenn sich das Kältemittel vom ersten Kühlanschluss (61) zum zweiten Kühlanschluss (62) bewegt, kleiner ist als eine Kraft, die verwendet wird, um den Strom des Kältemittels zu verringern, wenn sich das Kältemittel vom zweiten Kühlanschluss (62) zum ersten Kühlanschluss (61) bewegt,
eine elektrische Heizexpansionsvorrichtung (20), die zur elektrischen Kühlexpansionsvorrichtung (10) parallelgeschaltet ist, um einen weiteren Strom des Kältemittels zu bilden, der zum Strom des Kältemittels parallel ist, und konfiguriert ist, das Kältemittel durch Verringern des weiteren Stroms des Kältemittels, das durch den Innenwärmetauscher (140) kondensiert wurde, zu expandieren, wenn der Kühlkreislauf (100) im Heizzustand ist, wobei die elektrische Heizexpansionsvorrichtung (20) einen ersten Heizanschluss (61) und einen zweiten Heizanschluss (62), der mit dem ersten Heizanschluss (61) verbunden ist, enthält und eine Kraft, die verwendet wird, um den weiteren Strom des Kältemittels zu verringern, wenn sich das Kältemittel vom ersten Heizanschluss (61) zum zweiten Heizanschluss (62) bewegt, kleiner ist als eine Kraft, die verwendet wird, um den weiteren Strom des Kältemittels zu verringern, wenn sich das Kältemittel vom zweiten Heizanschluss (62) zum ersten Heizanschluss (61) bewegt, und
eine Sperrvorrichtung (50), um zu blockieren, dass das Kältemittel in die elektrische Kühlexpansionsvorrichtung (10) strömt, wenn der Kühlkreislauf (100) im Heizzustand ist, und zu blockieren, dass das Kältemittel in die elektrische Heizexpansionsvorrichtung (20) strömt, wenn der Kühlkreislauf (100) im Kühlzustand ist, und
das Kältemittel sich an der elektrischen Kühlexpansionsvorrichtung (10) vom ersten Kühlanschluss (61) zum zweiten Kühlanschluss (62) vorbei bewegt, wenn der Kühlkreislauf (100) im Kühlzustand ist, und sich an der elektrischen Heizexpansionsvorrichtung (20) vom ersten Heizanschluss (61) zum zweiten Heizanschluss (62) vorbei bewegt, wenn der Kühlkreislauf (100) im Heizzustand ist; wobei
die elektrische Kühlexpansionsvorrichtung (10) das Kältemittel durch Verringern des Stroms des Kältemittels, das sich an ihr vorbei bewegt, expandiert und eine Steuerung eines Ausmaßes ermöglicht, in dem der Strom des Kältemittels verringert wird,
die elektrische Heizexpansionsvorrichtung (20) das Kältemittel durch Verringern des weiteren Stroms des Kältemittels, das sich an ihr vorbei bewegt, expandiert und eine Steuerung eines Ausmaßes ermöglicht, in dem der weitere Strom des Kältemittels verringert wird, und
die Fahrzeugklimatisierungsvorrichtung (200) ferner Folgendes umfasst:
eine Steuereinheit (240), die konfiguriert ist, die Ausmaße zu steuern, in denen die Ströme des Kältemittels verringert werden;
**dadurch gekennzeichnet, dass** die Steuereinheit (240) ferner konfiguriert ist, das Ausmaß vorzusteuern, in dem der Strom des Kältemittels im Kühlzustand durch die elektrische Kühlexpansionsvorrichtung (10) vor einem Wechsel vom Heizzustand zum Kühlzustand verringert wird, und das Ausmaß vorzusteuern, in dem der weitere Strom des Kältemittels im Heizzustand durch die elektrische Heizexpansionsvorrichtung (20) vor einem Wechsel vom Kühlzustand zum Heizzustand verringert wird.

2. Fahrzeugklimatisierungsvorrichtung (200) nach Anspruch 1, wobei
jede der elektrischen Kühlexpansionsvorrichtung (10) und der elektrischen Heizexpansionsvorrichtung (20) ein elektronisches Expansionsventil (60) enthält und
die Sperrvorrichtung (50) zwei Rückschlagventile (31, 41) enthält, wobei ein Rückschlagventil (31) der zwei Rückschlagventile (31, 41) zu dem elektronischen Expansionsventil (60), das in der elektrischen Kühlexpansionsvorrichtung (10) enthalten ist, in Reihe geschaltet ist, um den Strom des Kältemittels zu bilden, und das weitere Rückschlagventil (41) der zwei Rückschlagventile (31, 41) zu dem elektronischen Expansionsventil (60), das in der elektrischen Heizexpansionsvorrichtung (20) enthalten ist, in Reihe geschaltet ist, um den weiteren Strom des Kältemittels zu bilden.

3. Fahrzeugklimatisierungsvorrichtung (200) nach Anspruch 1, wobei
jede der elektrischen Kühlexpansionsvorrichtung (10) und der elektrischen Heizexpansionsvorrichtung (20) ein oder mehrere elektronische Expansionsventile (60) enthält und
eine Anzahl des einen oder der mehreren elektronischen Expansionsventile (60), die in der elektrischen Kühlexpansionsvorrichtung (10) enthalten sind, sich von einer Anzahl des einen oder der mehreren elektronischen Expansionsventile (60), die in der elektrischen Heizexpansionsvorrichtung (20) enthalten sind, unterscheidet.

4. Fahrzeugklimatisierungsvorrichtung (200) nach einem der Ansprüche 1 bis 3, wobei
der Kompressor (110) einen Einlass (IN), durch den das Kältemittel, das durch den Verdampfer verdampft wurde, einströmt, und einen Auslass (OUT), durch den das Kältemittel, nachdem es komprimiert worden ist, zum Kondensator herausströmt, besitzt und
die Schaltvorrichtung (230) Folgendes enthält:
ein erstes elektromagnetisches Ventil (231a), das in einem Strömungsweg für das Kältemittel zwischen dem Auslass (OUT) des Kompressors (110) und dem Außenwärmetauscher (130) angeordnet ist,
ein zweites elektromagnetisches Ventil (231b), das in einem Strömungsweg für das Kältemittel zwischen dem Auslass (OUT) des Kompressors (110) und dem Innenwärmetauscher (140) angeordnet ist,
ein drittes elektromagnetisches Ventil (231c), das in einem Strömungsweg für das Kältemittel zwischen dem Einlass (IN) des Kompressors (110) und dem Innenwärmetauscher (140) angeordnet ist, und
ein viertes elektromagnetisches Ventil (231d), das in einem Strömungsweg für das Kältemittel zwischen dem Einlass (IN) des Kompressors (110) und dem Außenwärmetauscher (130) angeordnet ist.

## Revendications

1. Dispositif de climatisation pour véhicule (200) comprenant :
un compresseur (110) pour comprimer un fluide frigorigène ;
un expanseur (120) pour dilater le fluide frigorigène ;
un échangeur de chaleur extérieur (130) et un échangeur de chaleur intérieur (140) qui forment un cycle de réfrigération (100) conjointement avec le compresseur (110) et l'expanseur (120), chaque échangeur parmi l'échangeur de chaleur extérieur (130) et l'échangeur de chaleur intérieur (140) pouvant fonctionner dans le cycle de réfrigération (100) en tant que condenseur pour condenser le fluide frigorigène et qu'évaporateur pour faire évaporer le fluide frigorigène, un échangeur parmi l'échangeur de chaleur extérieur (130) ou l'échangeur de chaleur intérieur (140) fonctionnant en tant que condenseur lorsque l'autre échangeur parmi l'échangeur de chaleur extérieur (130) ou de l'échangeur de chaleur intérieur (140) fonctionne en tant qu'évaporateur ; et
un dispositif de commutation (230) pour commuter un état du cycle de réfrigération (100) entre un état de refroidissement dans lequel l'échangeur de chaleur extérieur (130) fonctionne en tant que condenseur et l'échangeur de chaleur intérieur (140) fonctionne en tant qu'évaporateur et un état de chauffage dans lequel l'échangeur de chaleur intérieur (140) fonctionne en tant que condenseur et l'échangeur de chaleur extérieur (130) fonctionne en tant qu'évaporateur,
le fluide frigorigène contenant du dioxyde de carbone,
l'expanseur (120) incluant
un dispositif d'expansion électrique de refroidissement (10) pour dilater le fluide frigorigène en réduisant un écoulement du fluide frigorigène condensé par l'échangeur de chaleur extérieur (130) lorsque le cycle de réfrigération (100) est dans l'état de refroidissement, le dispositif d'expansion électrique de refroidissement (10) incluant un premier orifice de refroidissement (61) et un deuxième orifice de refroidissement (62) raccordé au premier orifice de refroidissement (61), une force utilisée pour réduire l'écoulement du fluide frigorigène lorsque le fluide frigorigène passe du premier orifice de refroidissement (61) vers le deuxième orifice de refroidissement (62) étant inférieure à une force utilisée pour réduire l'écoulement du fluide frigorigène lorsque le fluide frigorigène passe du deuxième orifice de refroidissement (62) vers le premier orifice de refroidissement (61),
un dispositif d'expansion électrique de chauffage (20) raccordé en parallèle au dispositif d'expansion électrique de refroidissement (10) pour former un autre écoulement du fluide frigorigène qui est parallèle à l'écoulement du fluide frigorigène et configuré pour dilater le fluide frigorigène en réduisant l'autre écoulement du fluide frigorigène condensé par l'échangeur de chaleur intérieur (140) lorsque le cycle de réfrigération (100) est dans l'état de chauffage, le dispositif d'expansion électrique de chauffage (20) incluant un premier orifice de chauffage (61) et un deuxième orifice de chauffage (62) raccordé au premier orifice de chauffage (61), une force utilisée pour réduire l'autre écoulement du fluide frigorigène lorsque le fluide frigorigène passe du premier orifice de chauffage (61) vers le deuxième orifice de chauffage (62) étant inférieure à une force utilisée pour réduire l'autre écoulement du fluide frigorigène lorsque le fluide frigorigène passe du deuxième orifice de chauffage (62) vers le premier orifice de chauffage (61), et
un dispositif d'empêchement (50) pour empêcher le fluide frigorigène de s'écouler jusque dans le dispositif d'expansion électrique de refroidissement (10) lorsque le cycle de réfrigération (100) est dans l'état de chauffage, et pour empêcher le fluide frigorigène de s'écouler jusque dans le dispositif d'expansion électrique de chauffage (20) lorsque le cycle de réfrigération (100) est dans l'état de refroidissement, et
le fluide frigorigène passe à travers le dispositif d'expansion électrique de refroidissement (10) à partir du premier orifice de refroidissement (61) vers le deuxième orifice de refroidissement (62) lorsque le cycle de réfrigération (100) est dans l'état de refroidissement, et passe à travers le dispositif d'expansion électrique de chauffage (20) à partir du premier orifice de chauffage (61) vers le deuxième orifice de chauffage (62) lorsque le cycle de réfrigération (100) est dans l'état de chauffage ;
où
le dispositif d'expansion électrique de refroidissement (10) dilate le fluide frigorigène en réduisant l'écoulement du fluide frigorigène passant à travers celui-ci et permet la commande d'un degré au niveau duquel l'écoulement du fluide frigorigène est réduit,
le dispositif d'expansion électrique de chauffage (20) dilate le fluide frigorigène en réduisant l'autre écoulement du fluide frigorigène passant à travers celui-ci et permet la commande d'un degré au niveau duquel l'autre écoulement du fluide frigorigène est réduit, et
le dispositif de climatisation pour véhicule (200) comprend en outre
un dispositif de commande (240) configuré pour commander les degrés au niveau desquels les écoulements du fluide frigorigène sont réduits ;
**caractérisé en ce que** le dispositif de commande (240) est en outre configuré pour pré-commander le degré au niveau duquel l'écoulement du fluide frigorigène est réduit dans l'état de refroidissement par le dispositif d'expansion électrique de refroidissement (10) avant un changement de l'état de chauffage à l'état de refroidissement et pour pré-commander le degré au niveau duquel l'autre écoulement du fluide frigorigène est réduit dans l'état de chauffage par le dispositif d'expansion électrique de chauffage (20) avant un changement de l'état de refroidissement à l'état de chauffage.

2. Dispositif de climatisation pour véhicule (200) selon la revendication 1, où
chaque dispositif parmi le dispositif d'expansion électrique de refroidissement (10) et le dispositif d'expansion électrique de chauffage (20) inclut une vanne d'expansion électronique (60), et
le dispositif d'empêchement (50) inclut deux vannes antiretour (31, 41), une vanne antiretour (31) des deux vannes antiretour (31, 41) étant raccordée en série à la vanne d'expansion électronique (60) incluse dans le dispositif d'expansion électrique de refroidissement (10) pour former l'écoulement du fluide frigorigène, et l'autre vanne antiretour (41) des deux vannes antiretour (31, 41) étant raccordée en série à la vanne d'expansion électronique (60) incluse dans le dispositif d'expansion électrique de chauffage (20) pour former l'autre écoulement du fluide frigorigène.

3. Dispositif de climatisation pour véhicule (200) selon la revendication 1, dans lequel
chaque dispositif parmi le dispositif d'expansion électrique de refroidissement (10) et le dispositif d'expansion électrique de chauffage (20) inclut une ou plusieurs vannes d'expansion électroniques (60), et
un certain nombre des unes ou plusieurs vannes d'expansion électroniques (60) incluses dans le dispositif d'expansion électrique de refroidissement (10) diffèrent d'un certain nombre des unes ou plusieurs vannes d'expansion électroniques (60) incluses dans le dispositif d'expansion électrique de chauffage (20).

4. Dispositif de climatisation pour véhicule (200) selon l'une quelconque des revendications 1 à 3, où
le compresseur (110) a une entrée (IN) à travers laquelle le fluide frigorigène évaporé par l'évaporateur s'écoule en entrée et une sortie (OUT) à travers laquelle le fluide frigorigène après avoir été comprimé s'écoule en sortie vers le condenseur, et
le dispositif de commutation (230) inclut
une première vanne électromagnétique (231a) située dans un trajet d'écoulement pour le fluide frigorigène entre la sortie (OUT) du compresseur (110) et l'échangeur de chaleur extérieur (130),
une deuxième vanne électromagnétique (231b) située dans un trajet d'écoulement pour le fluide frigorigène entre la sortie (OUT) du compresseur (110) et l'échangeur de chaleur intérieur (140),
une troisième vanne électromagnétique (231c) située dans un trajet d'écoulement pour le fluide frigorigène entre l'entrée (IN) du compresseur (110) et l'échangeur de chaleur extérieur (140), et
une quatrième vanne électromagnétique (231d) située dans un trajet d'écoulement pour le fluide frigorigène entre l'entrée (IN) du compresseur (110) et l'échangeur de chaleur extérieur (130).
